# EUROPEAN PATENT SPECIFICATION

(11) **EP 1 121 023 B1**
(45) Date of publication and mention of the grant of the patent: **22.06.2005**
(21) Application number: 99953792.1
(22) Date of filing: 13.10.1999
(51) Int. Cl.: A23L 1/18

(54) **METHOD FOR PRODUCING FLAVOURED POPCORN**
VERFAHREN ZUR HERSTELLUNG VON AROMATISIERTEM POPCORN
PROCEDE DE PRODUCTION DE MAIS ECLATE AROMATISE

(30) Priority: 16.10.1998 IT TV980041 U
(43) Date of publication of application: 08.08.2001
(73) Proprietor: Trinca, Renato, 31110 Bavaria di Nervesa della Battaglia (IT)
(72) Inventor: Trinca, Renato, 31110 Bavaria di Nervesa della Battaglia (IT)
(74) Representative: Forattini, Amelia
(86) International application number: PCT/EP1999/007670
(87) International publication number: WO 2000/022940

(56) References cited:
- US-A- 3 505 076
- US-A- 3 617 309
- US-A- 3 830 941
- US-A- 3 843 814
- US-A- 4 640 842
- US-A- 4 900 567
- US-A- 4 904 487
- US-A- 4 904 488
- US-A- 5 215 770
- S.A.MATZ: "Snack Food Technology" 1976 , AVI , USA XP002129009 Pages 125-128, 219-224 page 125, paragraph 3 -page 126, paragraph 6 page 221, paragraph 1 -page 222, paragraph 2 page 223, paragraph 1 -page 224, paragraph 4

## Description

### Technical Field

The present invention relates to a method for producing flavored popcorns.

### Background Art

As known, popcorns are produced by exposing to dry heat the kernels of corn, particularly Indian corn (Zea mays everta) that thereby pop or are everted by the explosion of the contained moisture and form a white starchy mass many times the size of the original kernel.

Methods for producing flavoured popcorn are known from US-3617 309, US 3 505 076, US 4 900 567 and "Snack Food Technology", S.A.Matz, 1976. Popcorns are often served with dressings such as salt, butter, and a variety of other flavors or dressings, that are generally sprinkled over the popcorns.

### Disclosure of the Invention

An aim of the present invention is to provide a method for flavoring popcorns.

A further aim of the invention is to provide a method, for producing flavored popcorns, particularly useful in the food processing industry.

A further aim of the invention is to provide a method for producing popcorns that retain the flavor over a period of time in the package.

The above aims, and other aims that will be more apparent hereinafter, are achieved by a method as claimed in the appended claims.

Further characteristics and advantages of the invention will be more apparent by the following description of an embodiment of the invention.

### Ways of camping out the invention

The method according to the invention comprises the steps of heating corn, particularly Indian corn (Zea mays everta), and then placing the popcorns in a container containing a sugar based composition comprising glucose syrup, vegetal fats, salt, flavors and coloring agents according to the desired final aspect and taste of the coated popcorns.

The sugar content of the composition is from 30% to 60% by weight of the total weight of the composition, depending on taste and on the treating temperature of the mixture. The treating time is from 20 to 40 minutes, depending on the temperature.

Vegetal fats generally melt at 60°C to 80°C and an optimal composition is obtained by adding 40% to 50% by weight of glucose to the composition.

The above mixture of popcorns into the composition is then kept at a temperature of 100°C to 150°C, according to the desired final product. The mixture is gently stirred to allow the popcorns to absorb the flavor and color. Treating time and temperature are regulated according to the combination of flavor and coloring agent used, each having an optimal yield at a specific temperature range.

Then, the mixture is poured over a flat surface, such as a stainless steel plate, to allow the mixture to cool down while it is stirred by means of steel plates or breakers to separate the popcorns.

The thus obtained product is then weighed and packaged in sealed plastic containers.

As said above, the composition contains flavors and coloring agents. According to an aspect of the invention, a specific coloring agent is used with each flavor.

Examples of flavor/coloring agent combinations are the following:
cinnamon flavor with bright red color;
hazelnut flavor with hazelnut color;
coconut flavor with orange color;
caramel flavor with dark green or pale red color, blue or green;
mint-licorice flavor with dark brown-black color;
chestnut flavor with hazelnut color;
cheese flavor with yellow color;
lemon flavor with yellow color.

## Claims

1. A method for producing flavored popcorns comprising the steps of:
heating corn to obtain popcorns; mixing the resultant popcorns into a sugar based composition comprising glucose syrup, vegetal fats, salt, at least one flavor and at least one coloring agent which matches said flavor; said composition having a sugar content from 30% to 60% by weight of the total weight of the composition;
keeping the resultant mixture at a temperature of between 100°C to 150°C, for a time of between 20 to 40 minutes, while stirring;
pouring the mixture over a flat stainless steel plate
wherein said mixture is allowed to cool down while it is stirred in order to let the mixture dry and separate.

2. The method, according to claim 1, **characterized in that** said composition contains cinnamon flavor combined with a coloring agent yielding a bright red color.

3. The method, according to claim 1, **characterized in that** said composition contains hazelnut flavor combined with a coloring agent yielding a hazelnut color.

4. The method, according to claim 1, **characterized in that** said composition contains coconut flavor combined with a coloring agent yielding an orange color.

5. The method, according to claim 1, **characterized in that** said composition contains caramel flavor combined with a coloring agent yielding a blue, green, dark green or pale red color.

6. The method, according to claim 1, **characterized in that** said composition contains mint-licorice flavor combined with a coloring agent yielding a dark brown-black color.

7. The method, according to claim 1, **characterized in that** said composition contains chestnut flavor combined with a coloring agent yielding a hazelnut color.

8. The method, according to claim 1, **characterized in that** said composition contains cheese flavor combined with a coloring agent yielding a yellow color.

9. The method, according to claim 1, **characterized in that** said composition contains lemon flavor combined with a coloring agent yielding a yellow color.

## Patentansprüche

1. Verfahren zum Herstellen von aromatisiertem Popcorn, umfassend die Schritte:
Erhitzen des Korns, um Popcorn zu erhalten;
Mischen des resultierenden Popcorns in eine Zusammensetzung auf Zuckerbasis, umfassend Glukosesirup, Pflanzenfette, Salz, mindestens einen
Aroma- und mindestens einen Farbstoff, der zu dem Aroma passt; wobei die Zusammensetzung einen Zuckergehalt von 20 bis 60 Gew.-% des Gesamtgewichts der Zusammensetzung hat;
Halten der resultierenden Mischung bei einer
Temperatur zwischen 100°C und 150°C für eine
Dauer zwischen 20 und 40 Minuten, während sie gerührt wird;
Gießen der Mischung auf eine flache Edelstahlplatte, wobei die Mischung abkühlen kann, während sie gerührt wird, um die Mischung zu trocknen und zu trennen.

2. Verfahren nach Anspruch 1, **dadurch gekennzeichnet, dass** die Zusammensetzung Zimtaroma in Kombination mit einem Farbstoff enthält, der eine leuchtend rote Farbe ergibt.

3. Verfahren nach Anspruch 1, **dadurch gekennzeichnet, dass** die Zusammensetzung Haselnussaroma in Kombination mit einem Farbstoff enthält, der eine Haselnussfarbe ergibt.

4. Verfahren nach Anspruch 1, **dadurch gekennzeichnet, dass** die Zusammensetzung Kokosnussaroma in Kombination mit einem Farbstoff enthält, der eine orange Farbe ergibt.

5. Verfahren nach Anspruch 1, **dadurch gekennzeichnet, dass** die Zusammensetzung Karamellaroma in Kombination mit einem Farbstoff enthält, der eine blaue, grüne, dunkelgrüne oder hellrote Farbe ergibt.

6. Verfahren nach Anspruch 1, **dadurch gekennzeichnet, dass** die Zusammensetzung Minze-Lakritz-Aroma in Kombination mit einem Farbstoff enthält, der eine dunkelbraunschwarze Farbe ergibt.

7. Verfahren nach Anspruch 1, **dadurch gekennzeichnet, dass** die Zusammensetzung Kastanienaroma in Kombination mit einem Farbstoff enthält, der eine Haselnussfarbe ergibt.

8. Verfahren nach Anspruch 1, **dadurch gekennzeichnet, dass** die Zusammensetzung Käsearoma in Kombination mit einem Farbstoff enthält, der eine gelbe Farbe ergibt.

9. Verfahren nach Anspruch 1, **dadurch gekennzeichnet, dass** die Zusammensetzung Zitronenaroma in Kombination mit einem Farbstoff enthält, der eine gelbe Farbe ergibt.

## Revendications

1. Procédé de production de pop-corn aromatisé comprenant les étapes consistant à :
faire chauffer le maïs pour obtenir du pop-corn ;
mélanger le pop-corn résultant dans une composition à base de sucre comprenant du sirop de glucose, des graisses végétales, du sel, au moins un parfum et au moins un agent colorant qui s'accorde avec ledit parfum ; ladite composition ayant une teneur en sucre allant de 30% à 60% en poids, du poids total de la composition ;
conserver le mélange résultant à une température comprise entre 100° et 150°C, pendant un laps de temps compris entre 20 et 40 minutes tout en remuant ;
verser le mélange sur une plaque en acier inoxydable plate dans laquelle ledit mélange est autorisé à refroidir tout en étant remué afin de laisser le mélange sécher et se séparer.

2. Procédé selon la revendication 1, **caractérisé en ce que** ladite composition contient un parfum de cannelle associé à un agent colorant donnant une couleur rouge brillante.

3. Procédé selon la revendication 1, **caractérisé en ce que** ladite composition contient un parfum de noisette associé à un agent colorant donnant une couleur noisette.

4. Procédé selon la revendication 1, **caractérisé en ce que** ladite composition contient un parfum de noix de coco associé à un agent colorant donnant une couleur orange.

5. Procédé selon la revendication 1, **caractérisé en ce que** ladite composition contient un parfum de caramel associé à un agent colorant donnant une couleur bleue, verte, vert foncé ou rouge pâle.

6. Procédé selon la revendication 1, **caractérisé en ce que** ladite composition contient un parfum de menthe réglisse associé à un agent colorant donnant une couleur noire-marron foncé.

7. Procédé selon la revendication 1, **caractérisé en ce que** ladite composition contient un parfum de châtaigne associé à un agent colorant donnant une couleur de châtaigne.

8. Procédé selon la revendication 1, **caractérisé en ce que** ladite composition contient un parfum de fromage associé à un agent colorant donnant une couleur jaune.

9. Procédé selon la revendication 1, **caractérisé en ce que** ladite composition contient un parfum de citron associé à un agent colorant donnant une couleur jaune.
